# EUROPEAN PATENT SPECIFICATION

(11) **EP 1 382 416 B1**
(45) Date of publication and mention of the grant of the patent: **04.11.2009**
(21) Application number: 03425456.5
(22) Date of filing: 10.07.2003
(51) Int. Cl.: B23Q 11/08

(54) **A protective covering device for machinery or equipment**
Schutzabdeckvorrichtung für Maschinen oder Anlagen
Dispositif couvrant de protection pour machines ou installations

(30) Priority: 17.07.2002 IT BO20020459
(43) Date of publication of application: 21.01.2004
(73) Proprietor: P.E.I. PROTEZIONI ELABORAZIONI INDUSTRIALI S.r.l., 40012 Calderara di Reno (BO) (IT)
(72) Inventor: Bissolo, Fulvio, 39055 Laives (Bolzano) (IT)
(74) Representative: Lanzoni, Luciano

(56) References cited:
- US-A- 3 603 373
- PATENT ABSTRACTS OF JAPAN vol. 011, no. 228 (M-610), 24 July 1987 (1987-07-24) & JP 62 044347 A (MAKINO MILLING MACH CO LTD), 26 February 1987 (1987-02-26)

## Description

The present invention relates to a protective covering device for machinery and equipment.

In particular, the invention concerns a protective covering device for the working parts of automatic machines, machine tools or robotised systems, and can be advantageously applied to several industrial sectors.

The present specification refers, but without thereby restricting the scope of the invention, to the sector of machine tools, where machine components require effective protection from chippings, swarf, dust and other process waste.

Italian patent application No.BO99U000053 in the name of the same Applicant as the present discloses a protective covering device for the working tool of a machine tool. The working tool moves in a straight line in both directions and the protective covering device is designed to follow its movements in such a way as to cover and protect the part of the machine from which the working tool itself projects.

The device comprises a plurality of relatively thin cover panels, which overlap each other and the first of which is fixed to the machine at the zone to be protected, while the other panels can slide relative to one another and relative to the first panel, in the same direction as that in which the working tool moves. The sliding of the mobile panels is guided by two guide profiles of the first panel which have a C-shaped cross section and which extend lengthways in the direction of movement of the tool.

Each cover panel has a rectangular opening through which the mobile tool passes. More specifically, the opening in the first panel forms an area to be covered by the remaining mobile panels, whilst the openings in the mobile panels decrease in size starting from the one that faces the first panel. The cover panel in the outermost position, that is to say, the one opposite the fixed first panel in the set of mobile panels, is attached to and drawn by the mobile tool along the above mentioned straight path, whilst each of the other mobile panels is drawn along by a contact tab on the mobile panel adjacent to it on the outside.

Thus, as the mobile tool moves along its working path, the mobile panels in the different working positions cover corresponding, rectangular portions of the area defined by the opening in the first panel.

The overall thickness of the device described above is very limited. Each panel comprises a first section and a second section, lying longitudinally opposite each other in the same plane and connected by two longitudinal portions parallel to the tool feed path, in such a way as to form the boundary of the respective opening.

When fitted together, the panels making up the covering device slide over each other, and the two sets of first panel sections and second panel sections form two complementary portions, respectively first and second portions, of a covering wall. More specifically, the first and second sections are positioned on opposite sides of the tool along the tool feed path and overlap each other in tile-like fashion in opposite directions in such a way as to form two sets of panel sections that are symmetrical about the tool.

A protective covering device of the type under consideration is disclosed in JP 62044347, and comprises a machine having a tool and a set of sliding covering plates coupled to each other and having a first covering plate attached to the machine and a plurality of mobile covering plates that move relative to each other and relative to the first cover element along the defined path due to the movement of the tool. Each of the covering plates has a central opening through which the tool is placed, and also has two transversal portions positioned on opposite sides of the tool and joined by two longitudinal portions of the respective sliding plate. In both the first and second transversal portions, each transversal portion of each sliding covering element comprises a section that overlaps the next section of another sliding covering element, so that the succession of sliding covering elements avoid chippings, swarf, dust and other process waste to penetrate into the machine from the outside.

It is also known that in machine tools of the type under consideration, the working parts are cooled and lubricated by spraying fluid lubricants and

coolants onto the tool from above. Obviously, these fluids also strike the wall of the protective cover which, owing to its particular structure, does not guarantee a perfect seal.

The present invention has for an object to provide a protective covering device that overcomes the drawback mentioned above with reference to prior art.

Accordingly, the present invention provides a protective covering device for machinery and equipment **according to one or more of the appended claims.**

The invention will now be described with reference to the accompanying drawings which illustrate a preferred embodiment of it and in which:
- Figure 1 is a perspective view of the covering device according to the present invention;
- Figure 2 is an exploded view of the device of Figure 1;
- Figure 3 is a side view in cross section of the device of Figure 1;
- Figure 4 is a side perspective view, with parts cut away, of the device of Figure 1 in a different working position;

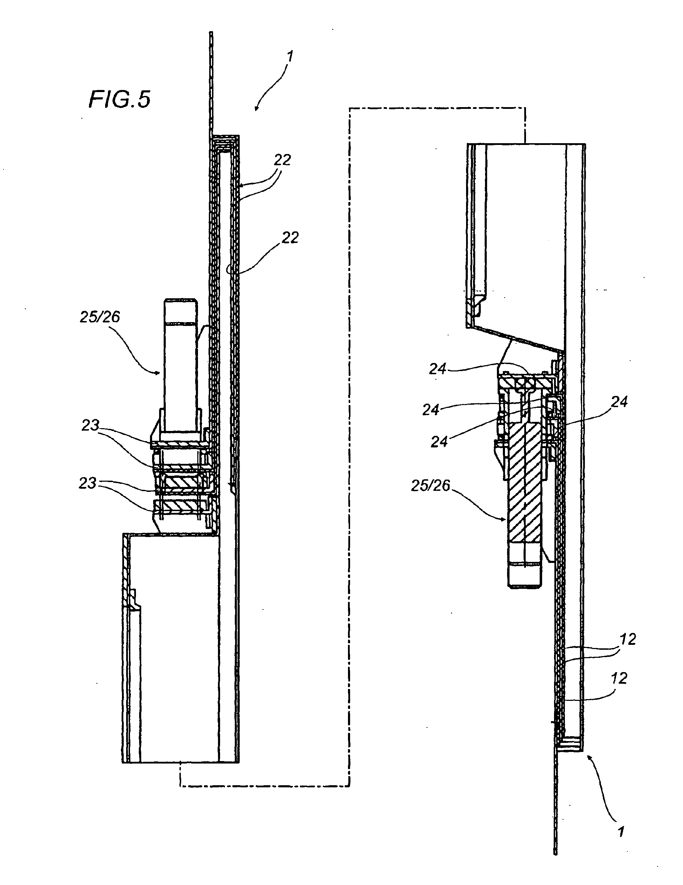

- Figure 5 is a side view in cross section of another embodiment of the device of Figure 1.

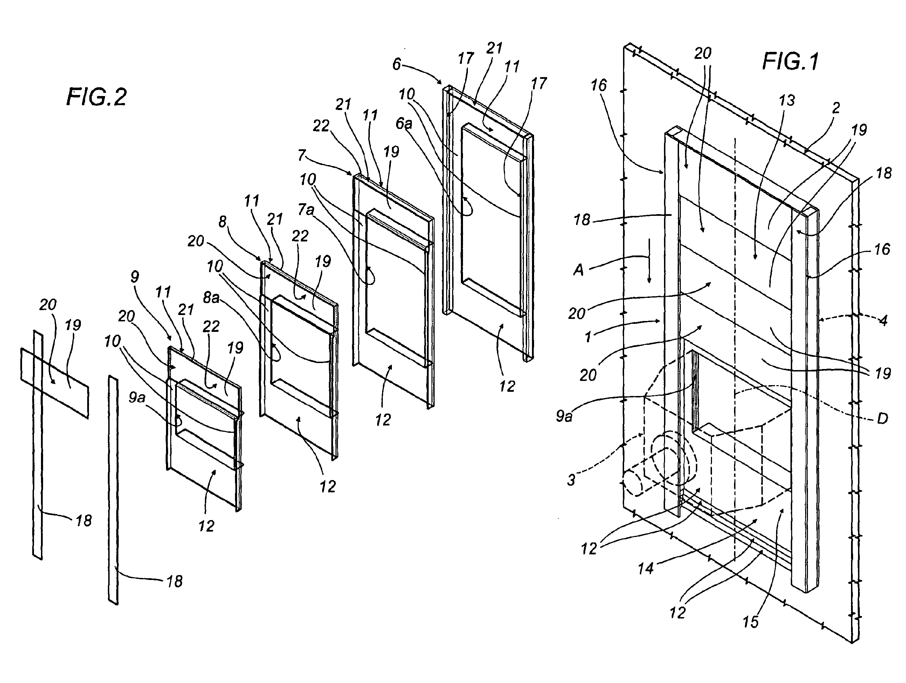

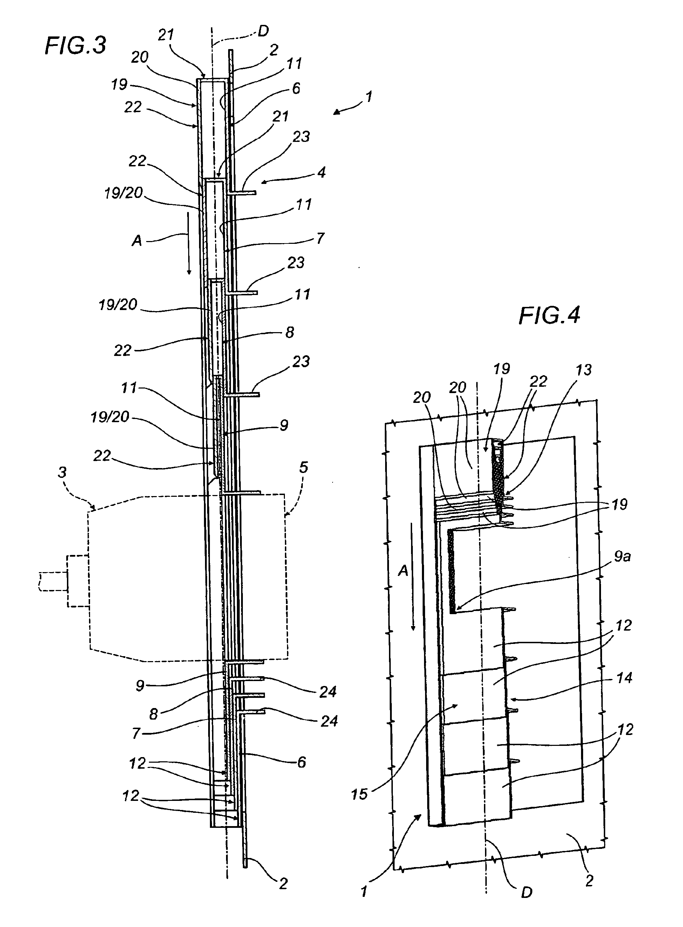

With reference to Figures 1 to 4, the numeral 1 denotes a protective covering device for a machine tool, of which only a part of a front wall 2 is illustrated and which comprises a working element 3 that moves in both directions along a substantially vertical path D and that is illustrated schematically by the dashed line in Figures 1 and 3.

The working element 3 is normally a tool forming part of a machine tool or similar machine and the protective covering device 1 is attached to the tool 3 in such a way as to follow the latter's backward and forward motion along the path D, covering and protecting a corresponding area 4 of the machine tool. Looking in more detail, the tool 3 has a rear portion 5 and projects from the protective covering device 1.

As illustrated in Figures 2 and 3, the device 1 comprises a set of cover elements which are slidably linked to each other and which consist of a first cover element 6 attached (in a way that is not illustrated) to the wall portion 2 of the machine at the area 4 to be protected, and a plurality of mobile cover elements 7, 8 and 9 that move relative to each other and relative to the fixed first cover element 6 along the path D.

The cover elements 6, 7, 8, 9 are made preferably of metal - for example steel - and consist of respective flat panels which are relatively thin, overlap each other and are substantially rectangular in shape. More specifically, the element 9 is positioned in contact with the element 8 which is positioned in contact with the element 7. The latter is positioned in contact with the element 6 which is attached to the front wall 2 of the machine.

The elements 6, 7, 8 and 9 are all substantially the same in width, transversal to the path D, whilst lengthways, in a direction parallel to the path D, they gradually decrease in size starting from the fixed first element 6 down to the last mobile cover element 9.

Each cover element 6, 7, 8 and 9 has a substantially rectangular, central opening labelled, respectively, 6a, 7a, 8a and 9a, each defined by two longitudinal portions 10 and two transversal portions 11 and 12 which, with reference to the accompanying drawings, are the upper transversal portions 11 and the lower transversal portions 12 of the cover elements 6, 7, 8 and 9. In their entirety, the upper transversal portions 11 and the lower transversal portions 12 form, respectively, a first portion 13 and a second portion 14 of a covering wall 15.

Besides the respective panel, the element 6 comprises a device 16 for guiding and retaining the mobile elements 7, 8 and 9. The device 16 comprises two tracks 17 each extending in a direction parallel to the path D along an outside edge of the longitudinal portions 10 of the panel constituting the first element 6 itself. More specifically, each track 17 is formed by the respective outside longitudinal edge which transversely contains the mobile cover elements 7, 8 and 9, these being held together in a pack by a pair of strips 18 mounted on the longitudinal edges and protruding from the latter towards the inside of the covering wall 15.

The openings 6a, 7a, 8a and 9a are all substantially the same in width, at right angles to the path D, whilst lengthways, in a direction parallel to the path D, they gradually decrease in size starting from the one in the fixed first element 6 down to the one in the last mobile cover element 9. Thus, during the movement of the tool 3 long the path D, the first portion 13 and the second portion 14 of the covering wall 15, complement each other and the wall 15 itself has an opening that coincides with the opening 9a in the element 9, through which the tool 3 protrudes.

In particular, the upper transversal portions 11 and the lower transversal portions 12 are in contact with each other and are drawn by the tool 3 as the latter moves along the path D. More specifically, the upper transversal portions 11 and the lower transversal portions 12 overlap each other starting from the cover element 6 and ending at the cover element 9, and proceeding outwards from the inside of the front wall 2 of the machine tool, the extent to which each element overlaps the next varying according to the position of the tool 3.

According to the present invention, since the protective covering device 1 is mounted vertically on the front wall 2 of the machine tool, the path D is substantially vertical and in both the first portion 13 and the second portion 14 of the covering wall 15, the transversal portions 11 and 12 of each cover element 6, 7, 8 and 9 comprise a first section and a second section, respectively. In particular, the second sections forming the second portion 14 of the covering wall 15 coincide with the transversal portions 12 of the cover elements and each lies in the same plane as the respective longitudinal portions 10 of each of the cover elements 6, 7 8 and 9. In this case, the second sections are labelled 12, like the transversal portions 12 they coincide with.

The first sections of the first portion 13 (the upper one) of the covering wall 15, on the other hand, are labelled 19 and consist of second portions 20, which are transversal to the path D and parallel to the transversal portions 11 to which they are associated, as illustrated in Figures 2 and 3, through connecting walls 21 which are also transversal to the path D and perpendicular to the portions 20 and 11. It should be noticed that the first sections 19 coincide with the second transversal portions 20.

Thus, along its full length, consisting of its upper portion 13 and its lower portion 14, on opposite sides of the tool 3, the covering wall 15 is defined by a succession of sections 20, 12, each overlapping the next section 20, 12 in tile-like fashion in the same direction, labelled A, along the path D, in such a way that all the sections 20 and 12 of the covering wall 15 face the same direction like the tiles of a roof.

More specifically, it follows from the above description that the overlapping direction A of each section 20, 12 of the two portions 13 and 14 is from the top down so as to prevent any coolant, washing liquid or lubricant sprayed onto the tool 3 from an area above the wall 2 from getting into the protected area 4.

With reference to Figures 2, 3 and 4, it should be noticed that in the upper portion 13 of the covering wall 15, for each first section 19, the set consisting of the respective second transversal portion 20, the transversal parallel portion 11, and the respective connecting wall 21 defines, for each cover element 6, 7, 8 and 9, a U-shaped box-like element 22.

The box-like elements 22 of the cover elements 6, 7, 8 and 9 are therefore telescopically coupled with each other.

As illustrated, in Figures 2, 3 and 4, besides the respective panel, each of the cover elements 6, 7, 8, 9 comprises first and second flanges 23, 24 located at the transversal edges opposite the corresponding openings 6a, 7a, 8a, 9a and extend at right angles from the respective panels on the same side as the area 4 to be protected.

The flanges 23 and 24 of each mobile cover element 7, 8, 9 constitute flanges for engaging with and stopping the adjacent covering element in such a way as to draw the cover elements along the path D and to stop them at an end of stroke position.

To lessen the impact between contiguous flanges, shock absorbing devices 25 consisting of energy dissipators are fitted between the flanges themselves, each being mounted in a fixed position on the respective flange.

Each of the devices 25, as described in European patent application EP n.02425257.9 dated 22.04.2002, the disclosure of which is incorporated herein by reference, comprises a pair of energy dissipating elements 26 designed to reduce the speed of the cover elements as they close in on each other, without returning energy between the elements themselves.

It will be understood that the invention can be modified and adapted in several ways without thereby departing from the scope of the inventive concept. Moreover, all the details of the invention may be substituted by technically equivalent elements. For example, the energy dissipating devices 26 can be substituted by shock absorbing pads made of flexible, resilient material.

## Claims

1. A protective covering device for machinery and equipment equipped with a mobile tool (3) that moves along at least one defined path (D); the device (1) being attached to the tool (3) and comprising a set of cover elements (6, 7, 8, 9) slidably coupled to each other and consisting of a first cover element (6) attached to the machine or piece of equipment at an area (4) to be protected, and a plurality of mobile cover elements (7, 8, 9) that move relative to each other and relative to the first cover element (6) along the defined path (D); each of the cover elements (6, 7, 8, 9) having an opening (6a, 7a, 8a, 9a) defined, on each element (6, 7, 8, 9) and with reference to the defined path (D), by two longitudinal portions (10) and two transversal portions (11, 12), the latter two defining a first and a second portion (13, 14) of a covering wall (15), the portions (13, 14), which are complementary, being positioned on opposite sides of the tool (3), wherein in both the first and second portions (13, 14) of the covering wall (15), each transversal portion (11, 12) of each cover element (6, 7, 8, 9) comprises a section (12, 19) that overlaps the next section (12, 19) in tile-like fashion in a single direction (A) along the defined path (D), in such a way that all the sections (12, 19) of the covering wall (15) face the same direction (A), and wherein in the second portion (14) of the covering wall (15), the respective second sections (12) coincide with the transversal portions (12) of each of the cover elements (6, 7, 8, 9) and lie in the same plane as the longitudinal portions (10) of the respective cover elements (6, 7, 8, 9), the protective covering device being **characterised in that** in the first portion (13) of the covering wall (15) the respective first sections (19) consist of second transversal portions (20) parallel to the respective transversal portions (11) to which they are associated through connecting walls (21) transversal to the path (D) and perpendicular to the two transversal portions (20, 11), and **in that** for each first section (19), the respective second transversal portion (20), first transversal portion (11) and connecting wall (21) form a U-shaped box-like element (22); the box-like elements (22) constituting the first sections (19) of the cover elements (6, 7, 8, 9) being telescopically coupled with each other.

2. The device according to claim 1, **characterised in that** the overlapping direction (A) of each section (12, 19) of the two portions (13, 14) of the covering wall (15) is from the top down.

3. The device according to claim 2, **characterised in that** the path (D) is substantially vertical.

4. The device according to any of the foregoing claims, **characterised in that** it comprises shock absorbing means (25) fitted between the cover elements (6, 7, 8, 9).

5. The device according to any of the foregoing claims, **characterised in that** it comprises energy dissipating means (25, 26) for reducing the speed of two adjacent consecutive elements (6, 7, 8, 9) as they approach each other without returning energy between the two elements (6, 7, 8, 9) themselves.

## Patentansprüche

1. Schutzabdeckvorrichtung für Maschinen und Anlagen, die mit einem beweglichen Werkzeug (3) ausgerüstet sind, das sich zumindest entlang eines vorgegebenen Weges (D) bewegt; wobei die Vorrichtung (1) an dem Werkzeug (3) befestigt ist und einen Satz Abdeckelemente (6, 7, 8, 9) beinhaltet, die gleitbar miteinander verbunden sind und aus einem ersten Abdeckelement (6), das an der Maschine oder dem Anlagenteil an einem zu schützenden Bereich (4) angebracht ist, sowie aus mehreren beweglichen Abdeckelementen (7, 8, 9) bestehen, die sich relativ zueinander und relativ zu dem ersten Abdeckelement (6) entlang des vorgegebenen Weges (D) bewegen; wobei jedes der Abdeckelemente (6, 7, 8, 9) eine Öffnung (6a, 7a, 8a, 9a) aufweist, die auf jedem Element (6, 7, 8, 9) und mit Bezug auf den vorgegebenen Weg (D) durch zwei längs verlaufende Teilbereiche (10) und zwei quer verlaufende Teilbereiche (11, 12) definiert wird, wobei die letztgenannten einen ersten und einen zweiten Teilbereich (13, 14) einer Abdeckwand (15) bilden und die Teilbereiche (13, 14), die komplementär zueinander sind, auf einander gegenüber liegenden Seiten des Werkzugs (3) angeordnet sind, worin in beiden der ersten und zweiten Teilbereiche (13, 14) der Abdeckwand (15) jeder quer verlaufende Teilbereich (11, 12) jedes Abdeckelements (6, 7, 8, 9) einen Abschnitt (12, 19) aufweist, der den nächsten Abschnitt (12, 19) ziegelartig in einer einzigen Richtung (A) entlang des vorgegebenen Weges (D) derart überlappt, dass alle Abschnitte (12, 19) der Abdeckwand (15) in die gleiche Richtung (A) weisen, und worin in dem zweiten Teilbereich (14) der Abdeckwand (15) die entsprechenden zweiten Abschnitte (12) mit den quer verlaufenden Teilbereichen (12) jedes der Abdeckelemente (6, 7, 8, 9) übereinstimmt und auf der selben Ebene liegt wie die längs verlaufenden Abschnitte (10) der entsprechenden Abdeckelemente (6, 7, 8, 9), wobei die Schutzabdeckvorrichtung **dadurch gekennzeichnet ist, dass** im ersten Teilbereich (13) der Abdeckwand (15) die entsprechenden ersten Abschnitte (19) aus zweiten quer verlaufenden Teilbereichen (20) bestehen, die parallel zu den entsprechenden quer verlaufenden Teilbereichen (11) sind, mit denen sie über Verbindungswände (21) verbunden sind, die quer zu dem Weg (D) und perpendikular zu den zwei quer verlaufenden Teilbereichen (20, 11) verlaufen, und dass für jeden ersten Abschnitt (19) der entsprechende zweite quer verlaufende Teilbereich (20), der erste quer verlaufende Teilbereich (11) und die Verbindungswand (21) ein U-förmiges kastenartiges Element (22) bilden; wobei die kastenartigen Elemente (22), die den ersten Abschnitten (19) der Abdeckelemente (6, 7, 8, 9) entsprechen, teleskopisch miteinander verbunden sind.

2. Vorrichtung nach Anspruch 1, **dadurch gekennzeichnet, dass** die Überlappungsrichtung (A) jedes Abschnitts (12, 19) der zwei Teilbereiche (13, 14) der Abdeckwand (15) von oben nach unten verläuft.

3. Vorrichtung nach Anspruch 2, **dadurch gekennzeichnet, dass** der Weg (D) im Wesentlichen vertikal ist.

4. Vorrichtung nach einem der vorhergehenden Ansprüche, **dadurch gekennzeichnet, dass** sie Stoßdämpfermittel (25) beinhaltet, die zwischen den Abdeckelementen (6, 7, 8, 9) angebracht sind.

5. Vorrichtung nach einem der vorhergehenden Ansprüche, **dadurch gekennzeichnet, dass** sie Energiedissipationsmittel (25, 26) beinhaltet, die dazu dienen, die Geschwindigkeit zweier benachbarter, aufeinander folgender Elemente (6, 7, 8, 9) zu reduzieren, während sich diese einander annähern, ohne Energierückgabe zwischen den zwei Elementen (6, 7, 8, 9) selbst.

## Revendications

1. Un dispositif couvrant de protection pour machines et installations équipées d'un outil mobile (3) qui se meut le long d'au moins un parcours (D) défini ; le dispositif (1) étant associé à l'outil (3) et comprenant une série d'éléments couvrants (6, 7, 8, 9) accouplés entre eux de façon coulissante et consistant en un premier élément couvrant (6) associé à la machine ou à l'installation au niveau d'une zone (4) à protéger, et en une pluralité d'éléments couvrants mobiles (7, 8, 9) qui se meuvent l'un par rapport à l'autre et par rapport au premier élément couvrant (6) le long du parcours (D) défini ; chacun des éléments couvrants (6, 7, 8, 9) ayant une ouverture (6a, 7a, 8a, 9a) qui est définie, sur chaque élément (6, 7, 8, 9) et en se référant au parcours (D) défini, par deux parties longitudinales (10) et deux parties transversales (11, 12), ces deux dernières définissant une première et une deuxième parties (13, 14) d'une paroi couvrante (15), lesdites parties (13, 14), qui sont complémentaires, étant situées sur des côtés opposés de l'outil (3), où dans lesdites deux première et deuxième parties (13, 14) de la paroi couvrante (15), chaque partie transversale (11, 12) de chaque élément couvrant (6, 7, 8, 9) comprend une section (12, 19) qui chevauche la section (12, 19) qui suit, comme des tuiles, dans une même direction (A) le long du parcours (D) défini, de manière à ce que toutes les sections (12, 19) de la paroi couvrante (15) soient orientées dans la même direction (A), et où dans la deuxième partie (14) de la paroi couvrante (15), les deuxièmes sections (12) respectives coïncident avec les parties transversales (12) de chacun des éléments couvrants (6, 7, 8, 9) et sont situées dans le même plan que les parties longitudinales (10) des éléments couvrants (6, 7, 8, 9) respectifs, le dispositif couvrant de protection étant **caractérisé en ce que**, dans la première partie (13) de la paroi couvrante (15), les premières sections (19) respectives sont définies par des deuxièmes parties transversales (20) parallèles aux parties transversales (11) respectives auxquelles elles sont associées par l'intermédiaire de parois de raccordement (21) transversales au parcours (D) et perpendiculaires aux deux parties transversales (20, 11), et **en ce que**, pour chaque première section (19), la deuxième partie transversale (20) respective, la première partie transversale (11) respective et la paroi de raccordement (21) respective forment un élément en caisson (22) en forme de « U » ; les éléments en caisson (22) constituant les premières sections (19) des éléments couvrants (6, 7, 8, 9) étant accouplés entre eux de façon télescopique.

2. Le dispositif selon la revendication 1,
**caractérisé en ce que** la direction de chevauchement (A) de chaque section (12, 19) des deux parties (13, 14) de la paroi couvrante (15) est orientée du haut vers le bas.

3. Le dispositif selon la revendication 2,
**caractérisé en ce que** le parcours (D) est essentiellement vertical.

4. Le dispositif selon l'une quelconque des revendications précédentes, **caractérisé en ce qu'**il comprend des moyens amortisseurs (25) montés entre les éléments couvrants (6, 7, 8, 9).

5. Le dispositif selon l'une quelconque des revendications précédentes, **caractérisé en ce qu'**il comprend des moyens dissipateurs d'énergie (25, 26) pour réduire la vitesse de deux éléments (6, 7, 8, 9) adjacents et consécutifs durant leur approche réciproque sans restituer d'énergie entre ces deux mêmes éléments (6, 7, 8, 9).
